# EUROPÄISCHE PATENTSCHRIFT

(11) **EP 2 653 792 B1**
(45) Veröffentlichungstag und Bekanntmachung des Hinweises auf die Patenterteilung: **16.03.2016**
(21) Anmeldenummer: 13001975.5
(22) Anmeldetag: 16.04.2013
(51) Int. Cl.: F24D 3/16, E04B 9/04, E04B 9/22, F24F 5/00, F28F 1/20, F28F 1/22

(54) **Wärmeleitprofil**
Heat conducting profile
Profil conducteur de chaleur

(30) Priorität: 19.04.2012 AT 4822012
(43) Veröffentlichungstag der Anmeldung: 23.10.2013
(73) Patentinhaber: Peer, Robert, 2381 Laab im Walde (AT)
(72) Erfinder: Peer, Robert, 2381 Laab im Walde (AT)

(56) Entgegenhaltungen:
- DE-A1- 1 779 620
- FR-A- 1 179 016
- FR-A1- 2 712 380

## Beschreibung

Die Erfindung betrifft ein Wärmeleitprofil, welches bevorzugt für den Einbau in Decken oder Wände, welche mit Gipsplatten verkleidet sind, vorgesehen ist.

Abgehängte Teile, bzw. Verkleidungen an Decken werden sehr oft über sogenannte C-Profil-Deckenschienen an der darüber liegenden, statisch tragenden Deckenkonstruktion befestigt. Dazu weist die Deckenschiene zumindest in einem Teilbereich ihrer Querschnittsfläche die Form eines derart liegenden C auf, dass die freien Schenkel nach oben ragen. Die freien Schenkelenden sind zueinander gekrümmt. In die damit gebildete Nut greift von oben her ein Hakenteil ein, welcher etwa die Form eines auf dem Kopf stehenden T aufweist und stellt die Verbindung zu weiter oben befindlichen Befestigungselementen her. Eine derartige Bauweise ist z.B. in der DE 87 14 063 U1 gezeigt.

Die DE 10 2004 057 384 B1 zeigt ein Wärmeleitprofil für den Einsatz an einer Decke, welches typischerweise als Aluminiumstrangpressprofil gefertigt ist. Es weist zwei durch jeweils zwei elastisch verformbare, gekrümmte Profilflanken begrenzte Nutbereiche auf, deren Querschnittsfläche etwa die Form eines Kreisabschnittes aufweist, dessen Mittelpunktswinkel knapp mehr als 180° beträgt. Durch Aufweiten besagter Profilflanken ist ein Rundrohr, welches ein Wärmeträgermedium führen kann, in diesen Nutbereich einklemmenbar. An der den Nutöffnungen abgewandten Seite sind die Profilflanken zu einem Profilsteg vereinigt, welcher an seinem anderen Ende zu einer in Einbausituation unten liegenden Wärmeleitplatte, deren untere Fläche als Abstrahlungsfläche dient, übergeht. Die beiden Aufnahmebereiche für jeweils ein Rundrohr sind so zueinander beabstandet und jeweils einseitig so mit einem gekrümmten Fortsatz so erweitert, dass zwischen ihnen wie bei einem C-Profil ein Nutbereich mit von der Nutöffnung her hinterschnittener Querschnittsfläche gebildet wird. Damit ist in das Wärmeleitprofil zwecks Befestigung an weiter oben liegenden Teilen ein Hakenteil in Form eines auf dem Kopf stehenden T einhängbar.

Die Schriften DE 198 03 114 C2, DE 201 06 884 U1 und EP 733 866 A2 zeigen unter anderem Wärmeleitprofile die typischerweise durch Walzprofilieren von Blech (auch als "Rollformen von Blechbändern" bezeichnet) gebildet sein können. Die Wärmeleitprofile weisen Nuten auf, deren Querschnittsfläche etwa die Form eines Kreisabschnittes aufweist, dessen Mittelpunktswinkel knapp mehr als 180° beträgt. In diese Nuten kann jeweils ein Rundrohr, welches ein Wärmeträgermedium führt eingeklemmt werden. Die Öffnungsfläche der Nuten liegt in Einbausituation unten. Typischerweise wird eine Gipskartonplatte an der Unterseite der Wärmeleitprofile anliegend montiert.

Die WO 2010121283 A2 zeigt unter anderem ein Wärmeleitprofil, welches durch Walzprofilieren von Blech gebildet sein kann. Es weist Nuten auf deren Öffnungsfläche von der Wärmeübertragungsfläche des Profils zu einer daran anzubringenden Gipskartonplatte abgewandt liegt, wobei die Querschnittsfläche der Nuten etwa die Form eines Kreisabschnittes aufweist, dessen Mittelpunktswinkel knapp mehr als 180° beträgt. In diese Nuten kann jeweils ein Rundrohr, welches ein Wärmeträgermedium führt eingeklemmt werden. Die Randflächen der Nuten sind durch zwei Lagen Blech gebildet, wobei von der äußeren Blechlage aus zur Bildung eines Vereindungssteges zwei Blechlagen aneinander anliegend zu einer Wärmeleitfläche führen.

Die DE 201 11 852 U1 zeigt ein Plattenelement zur Bildung einer Deckenstrahlplatte, wobei das Plattenelement als Profil beispielsweise durch Walzprofilieren von Blech gebildet sein kann. Es weist mehrere Nuten auf, deren Querschnittsfläche etwa die Form eines Kreisabschnittes hat, dessen Mittelpunktswinkel knapp mehr als 180° beträgt. In die Nuten sind von oben her Rohre einzuklippen. Das Profil wird an randseitigen hakenförmigen Wandbereichen aufgehängt.

Die DE 1779620 A1 zeigt schon 1971 ein Profil, welchem man die Wirkung eines Wärmeleitprofils zuschreiben kann, welches eine Rohraufnahmenut aufweist, deren Wand zwei geteilte Flächenbereiche aufweist, welche über eine zweischichte Profilwand miteinander verbunden sind, wobei die direkte Verbindung zwischen den beiden Schichten von der Rohraufnahmenut entfernt liegt. Das Profil dient vor allem als Halterung, mit Hilfe derer an einem fix an einer Decke verankerten Rohr im Nachhinein eine untere Abdeckung befestigt wird. Erst wird das Rohr, beispielsweise mit Hilfe von Rehrschellen, von unten her an der Decke verankert, dann wird das Profil von unten her auf das Rohr aufgeschnappt. Die Nutöffnung im Profil liegt aus diesem Grund oben.

Die FR 2 712 380 A1 offenbart in den dortigen Figuren 4 und 5 ein aus zwei getrennten, parallel zueinander ausgerichteten Teilprofilen zusammenzusetzendes Wärmeleitprofil, welches für die Warmeübertragung an oder von einem Rohr, welches ein Wärmeträgermedium führen kann dient, und eine Nut mit unten liegender öffnungsfläche aufweist, in welche das Rohr eingeklemmt ist, wobei jene Wand, welche als Begrenzung der Nut an dem einzuklemmenden Rohr anliegt zwei Teilflächenbereiche aufweist, wobei diese Teilflächenbereiche nicht unmittelbar miteinander verbunden sind. Die Teilflächenbereiche gehöhen zu jeweils unterschiedlichen Teilprofilen. Von den beiden Teilflächenbereichen aus führt eine durch die beiden Teilprofile gemeinsam gebildete zweischichtig ausgeführte Profilwand von der bestimmungsgemäßen Berührungsfläche zum Rohr weg. Die beiden Schichten der zweischichtig ausgeführten Profilwand sind an einem von der Nut entfernt liegenden Randbereich durch ein weiteres Element miteinander verbunden. Die für das Einbringen und ggf. Entfernen des Rohres in die bzw. aus der Nut erforderliche temporäre Erweiterung der Nutöffnung wird erreicht indem die beiden Teilprofile an der gemeinsamen Verbindungsstelle um eine zu den Teilprofilen parallel liegende Schwenkachse relativ zueinander geschwenkt werden ohne dabei nennenswert elastisch verformt zu werden.

Wann immer ein Rohr mit Wärmeträgermedium in einer Nut eines Wärmeleitprofils eingeklemmt und darin zwecks Wärmeübertragung gehalten wird gibt es einen Zielkonflikt. Um eine gute Wärmeübertragung vom Rohr auf das Profil zu erreichen soll der Umschlingungswinkel des Profils um das Rohr (in Querschnittsansicht) möglichst groß sein und auch die Wandstärke des Profils in dem umfassenden Bereich sollte hoch sein, damit es gut Wärme aufnehmen und wegleiten kann. Um die Montage, also das Eindrücken des Rohres in die Nut leicht und sicher beschädigungsfrei zu ermöglichen sollte der Umschlingungswinkel des Profils um das Rohr (welches Kreisringquerschnittsform hat) nur ganz knapp mehr als 180° betragen und die Wandstärke des Profils in dem umschlingenden Bereich sollte möglichst dünn sein, da es damit im elastischen Bereich leichter und weiter aufgebogen und unter Vorspannung am Rohr anliegend gehalten werden kann, als wenn es eine dickere Wandstärke hat. Im Material des Rohres die gewünschte elastische Verformbarkeit unterzubringen ist auch mit Nachteilen verbunden. Kunststoffe, welche die Elastizität hätten, sind schlechte Wärmeleiter. Wenn man bei metallischen Rohren die Wandstärke sehr dünn ausführt, womit die elastische Verformbarkeit steigt, wird die Empfindlichkeit gegen mechanische Zerstörung gefährlich erhöht.

Die der Erfindung zu Grunde liegende Aufgabe besteht daher darin, ein Wärmeleitprofil bereitzustellen, welches für die Wärmeübertragung zwischen einem Rohr, welches ein Wärmeträgermedium führen kann, und einer ebenen Fläche dient, wobei das Wärmeleitprofil eine nach unten offene Nut aufweist, in welche das Rohr einklemmbar ist. Gegenüber den dazu aus dem Stand der Technik bekannten Wärmeleitprofilen soll bei gleicher Materialwahl für Rohr und Wärmeleitprofil und auch bei gleichen Wandstärken dieser Teile der Umschlingungswinkel der Nut des Wärmeleitprofils um das Rohr vergrößert werden können und dennoch soll das Rohr leichter in die Nut einbringbar sein.

Für das Lösen der Aufgabe wird vorgeschlagen, jene Wand, welche als Begrenzung besagter Nut an dem einzuklemmenden Rohr anliegt aus mindestens zwei Teilflächenbereichen des Wärmeleitprofils auszubilden, welche durch Teile des Wärmeleitprofils nicht direkt an der Berührungsfläche zum Rohr statisch tragend miteinander verbunden sind, sondern über solche Wandbereiche des Wärmeleitprofils, welche von dieser Berührungsfläche abstehen.

Durch dieses nicht nur bei Strangpressprofilen sondern insbesondere auch bei Blechrollprofilen (also durch Walzprofilieren von Blech hergestellten Profilen) sehr einfach zu realisierende Merkmal wird erreicht, dass für das Einbringen des Rohres in die Nut des Wärmeleitprofils nicht nur die elastische Verformung der Nutwände des Wärmeleitprofils hilfreich ist, sondern auch die elastische Verformung von Wänden des Wärmeleitprofils, welche diese Nutwände tragen. Dadurch können die besagten beiden Teilflächenbereiche der Nutwand ohne großen Kraftaufwand und unter ausschließlich elastischer Verformung sehr viel weiter voneinander weg bewegt werden, als dies bei Bauweisen gemäß dem Stand der Technik möglich ist.

Die Erfindung wird an Hand von Zeichnungen veranschaulicht.
- Fig. 1:: zeigt ein erstes beispielhaftes erfindungsgemäßes Wärmeleitprofil einschließlich eines daran befestigten Rohrs in Profilansicht.
- Fig. 2:: zeigt in vergrößerter Profilansicht einen Teil des Wärmeleitprofils von Fig. 1 während ein Rohr daran montiert wird.
- Fig. 3:: zeigt in Teilschnittansicht eine Prinzipskizze einer Montagevorrichtung für das Einklemmen von Rohren in die Nuten des Wärmeleitprofils von Fig. 1 und Fig. 2. Die Blickrichtung liegt dabei parallel zur Profilrichtung.
- Fig. 4:: zeigt in vergrößerter Profilansicht einen Teil eines zweiten beispielhaften erfindungsgemäßen Wärmeleitprofils einschließlich eines daran befestigten Rohrs.
- Fig. 5:: zeigt in vergrößerter Profilansicht einen Teil eines dritten beispielhaften erfindungsgemäßen Wärmeleitprofils.
- Fig. 6:: zeigt in vergrößerter Profilansicht einen Teil eines vierten beispielhaften erfindungsgemäßen Wärmeleitprofils.

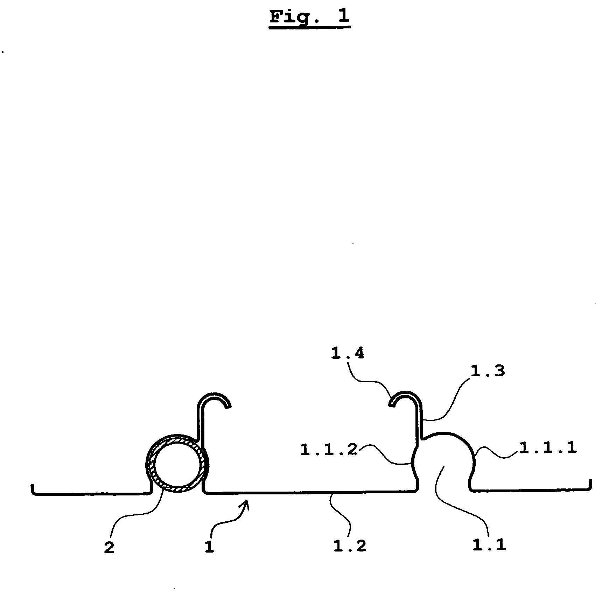

Das Wärmeleitprofil 1 gemäß Fig. 1 ist typischerweise ein Blechrollprofilaus, also aus einem Blechband aus Stahl, Aluminium oder Kupfer durch Walzprofilieren gebildet. Es weist zwei nach unten offene Nuten 1.1 für die Aufnahme von jeweils einem Rohr 2 auf, sowie eine dreiteilige ebene Wärmeübertragungsfläche 1.2 zur Übertragung von Wärme an eine an der Wärmeübertragungsfläche 1.2 unten angebrachte ebene Bauplatte wie typischerweise eine Gipskartonplatte. Weiters weist das Wärmeleitprofil 1 zwei Haken 1.4 auf, mit Hilfe derer es an Konstruktionsteilen, welche sich über dem Wärmeleitprofils befinden aufgehängt werden kann.

Beim Walzprofilieren eines Blechbandes wird das Blechband durch mindestens einen sogenannten Rollensatz geführt dessen einzelne Walzen mit zur Längsrichtung des Blechbandes normal stehenden Achsen ausgerichtet sind. An den Walzen wird das Blechband zwecks Herstellens einer gewünschten Profilform durch Biegung um Biegeachsen welche zur Längsrichtung des Blechbandes parallel liegen plastisch umgeformt.

Erfindungsgemäße Wärmeleitprofile der Art wie in Fig. 1 gezeigt, nämlich mit untenliegenden Öffnungen der Nuten 1.1, in welche jeweils ein Rohr einklemmbar ist, und mit oben liegenden Haken 1.4, mit Hilfe derer das Wärmeleitprofil aufhängbar ist, lassen sich besonders material- und fertigungseffizient als Blechrollprofil aus einem einzigen Blechband durch Walzprofilieren fertigen.

In Fig. 1 ist das Wärmeleitprofils 1 in jener Form gezeigt, welche es hat, wenn Rohre 2 darin festgeklemmt sind und an der Unterseite seiner Wärmeübertragungsfläche 1.2 eine Gipskartonplatte befestigt ist. In dem nicht mit irgendwelchen Anbauteilen verbundenen Zustand ist das Wärmeleitprofil 1 gegenüber der dargestellten Form dahingehend verformt, dass die Breite der beiden Nuten 1.1 etwas enger ist und dass die beiden seitlichen Streifen der Wärmeübertragungsfläche 1.2 zu der Kante der jeweils daran angrenzenden Nut 1.1 hin etwas nach oben geneigt ist. Die Querschnittsform der Nut 1.1 ist etwa die eines Kreisabschnittes, wobei der zugehörige Mittelpunktswinkel deutlich größer ist als 180°, sodass also die maximale Breite der Nut klar größer ist als die Breite der Öffnungsfläche der Nut. Bestimmungsgemäß wird in jede Nut 1.1 ein Rohr 2 - im dargestellten Beispiel mit kreisförmiger Außenkontur der Querschnittsfläche - eingeklemmt. Damit ein Rohr 2 in eine Nut 1.1 des Wärmeleitprofils 1 eingebracht werden kann, müssen die beiden Nutflanken vorübergehend soweit aufgebogen werden, das die Breite der Öffnungsfläche der Nut 1.1 ausreichend groß wird, dass das Rohr 2 hindurchgequetscht werden kann.

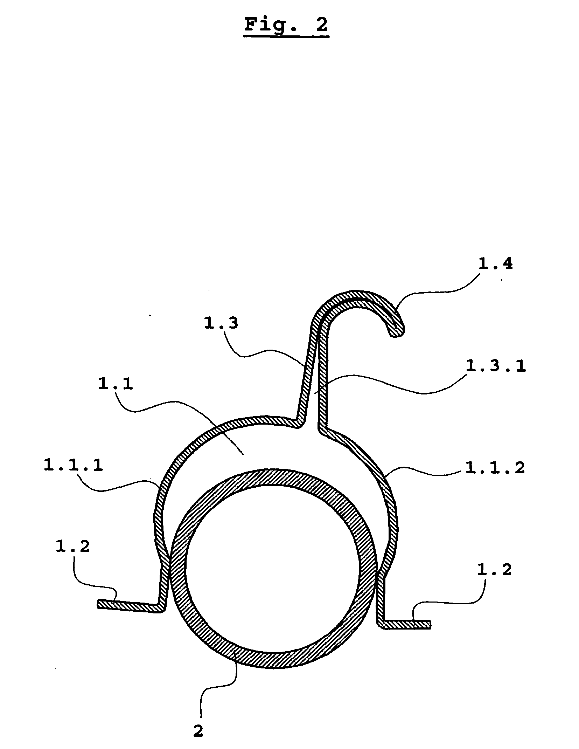

Der Vorgang des Hindurchquetschens eines Rohrs 2 durch die Öffnung einer Nut 1.1 eines Wärmeleitprofils 1 ist in Fig. 2 skizziert.

Erfindungsgemäß besteht die Wand einer Nut 1.1 aus zwei Teilflächenbereichen 1.1.1 und 1.1.2, welche miteinander durch Teile des Wärmeleitprofils nicht direkt an der Begrenzungsfläche der Nut 1.1 - welche auch die Berührungsfläche zum Rohr 2 ist - verbunden sind, sondern nur über Profilwände 1.3, 1.4, welche von der Nut 1.1 abstehen. Sofern auf die Teilflächenbereiche 1.1.1, 1.1.2 der Nutwand Kräfte oder Biegemomente wirken, durch welche diese bezüglich der Nut 1.1 nach außen gebogen werden, werden damit auch die Profilwände 1.3, 1.4 mit verformt. Es ist evident, dass damit die jene elastische Verformbarkeit des Wärmeleitprofils 1 zufolge welche die Breite der Öffnungsfläche der Nut 1.1 durch angreifende Kräfte elastisch aufgeweitet werden kann, sehr viel weicher ist als wenn die Wand der Nut 1.1 durch eine durchgehende Profilfläche gebildet wäre und nicht aus zwei relativ unabhängig voneinander bewegbaren, getrennten Teilflächenbereichen 1.1.1, 1.1.2.

In dem in Fig. 1 und Fig. 2 dargestellten Beispiel bilden die Profilwände 1.3, 1.4 des Wärmeleitprofils 1 einen Stiel, welcher in einen Haken ausläuft, wobei Stiel und Haken jeweils durch zwei aneinander anliegende und parallel zueinander verlaufende Blechwände gebildet sind. Die Wärmeübertragungsfläche 1.2 hingegen ist nur aus einer Blechfläche gebildet.

Während des Aufbiegens der Nutöffnung zum Einbringen eines Rohrs 2 in die Nut 1.1 werden vor allem die beiden Profilwände, welche den Stiel 1.3 bilden voneinander weg bewegt, sodass sich dazwischen ein leerer Zwischenraum 1.3.1 bildet (Fig. 2).

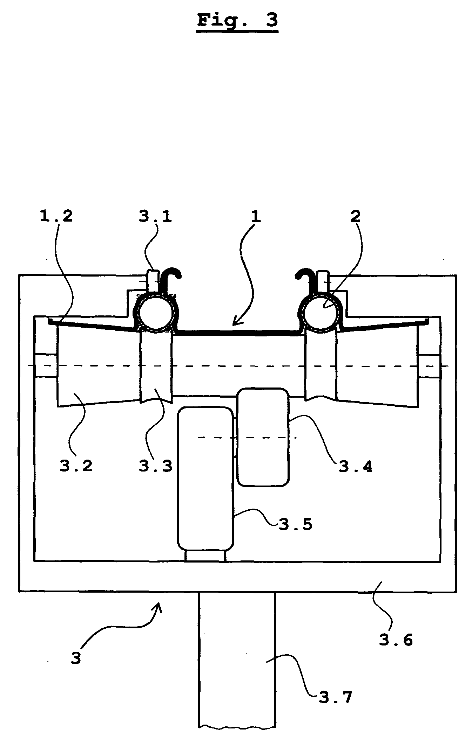

Durch die elastisch sehr weiche Aufweitbarkeit der Öffnung der Nuten 1.1 von erfindungsgemäßen Wärmeleitprofilen 1 wird es möglich die in die Nuten einzubringenden Rohre 2 mit einer Montagevorrichtung 3 wie in Fig. 3 beispielhaft für das Wärmeleitprofil 1 gemäß Fig. 1 und Fig. 2 skizziert einzubringen.

Die Montagevorrichtung 3 weißt je Nut 1.1 mindestens drei Rollen 3.1, 3.2 3,3 auf deren Rollrichtung parallel zur Profilrichtung des Wärmeleitprofils 1 ausgerichtet ist. Die beiden Rollen 3.1, 3.2 sind in einem Axialabstand zueinander angeordnet und drücken mit ihren Mantelflächen bezüglich der Ebene der Öffnung der Nut 1.1 von unterschiedlichen Seiten her an das Wärmeleitprofil 1 an. Dadurch wird der im Nahbereich dieses Rollenpaares befindliche Längsabschnitt einer Nut 1.1 aufgeweitet, sodass ihre Öffnungsfläche dort zumindest annähernd so breit wird wie der Durchmesser des Rohres 2 wenn dieses nicht verformt ist. Die Mantelfläche der dritten Rolle 3.3 ist tailliert ausgeführt und sie ragt an die Öffnungsfläche der Nut 1.1. Das Rohr 2 verläuft an der der Nut 1.1 zugewandten Seite der Mantelfläche der Rolle 3.3. Indem die ganze Montagevorrichtung in Profilrichtung des Wärmeleitprofils 1 bewegt wird, drückt die Rolle 3.3 den an ihr befindlichen Längsbereich des Rohrs 2 in die Nut 1.1, deren Flanken an diesem Längsbereich durch die Rollen 3.1, 3.2 gegenüber dem unverformten Zustand elastisch aufgeweitet sind.

Im dargestellten Beispiel sind alle Rollen 3.2, 3.3 auf einer gemeinsamen Achse angeordnet und zu einem gemeinsamen Rollenkörper zusammengefasst und motorisch angetrieben. Der Antrieb beinhaltet einen Motor 3.5 und ein von diesem angetriebenes Reibrad 3.4 welches mit seiner Umfangsfläche an dem besagten Rollenkörper anliegt. Antrieb und Rollen sind in einem etwa C-förmigen Gehäuse 3.6 gehalten, welches seinerseits an einem Stiel 3.7 gehalten ist, durch welchen hindurch auch die Energiezufuhr für den Antrieb verläuft. Durch den Stiel 3.7 kann die Vorrichtung durch einen Menschen gehalten und geführt werden, während sie an einem schon an der Decke eines Raumes aufgehängten Wärmeleitprofil 1 entlang fährt und Rohre 2 in dem Wärmeleitprofil 1 montiert. Mor.tagevorrichtungen dieser Art wären zwar an Wärmeleitprofilen gemäß dem vorbekannten Stand der Technik zumindest auch denkbar, kamen bisher aber daran nicht zum Einsatz, weil das Einbringen der Rohre dabei mit zu hohem Kraftaufwand verbunden ist. An erfindungsgemäßen Wärmeleitprofilen funktioniert eine Montagevorrichtung der beschriebenen Art hingegen sehr gut.

Für die Wärmeübertragung zwischen Rohr 2 und Wärmeleitprofil 1 ist es von sehr untergeordneter Bedeutung, wie groß die Anpresskraft zwischen dem Rohr 2 und den Wänden der Nut 1.1 ist. Sofern zumindest eine geringe Anpresskraft vorhanden ist, ist wesentlich wichtiger, dass die Berührungsfläche zwischen Rohr 2 und Wärmeleitprofil 1 möglichst groß ist, was gleichbedeutend damit ist, dass in Querschnittsansicht der Umschlingungswinkel des Wärmeleitprofils 1 um das Rohr 2 möglichst groß sein soll. Wenn der Umschlingungswinkel sehr groß ist, bedeutet das, dass für das Einbringen des Rohres 2 in die Nut 1.1 die Öffnungsfläche der Nut gegenüber ihrem dauerhaften Zustand kurzzeitig sehr stark verbreitert werden muss. Durch die erfindungsgemäße Bauweise ist das extrem gut und problemlos durchführbar.

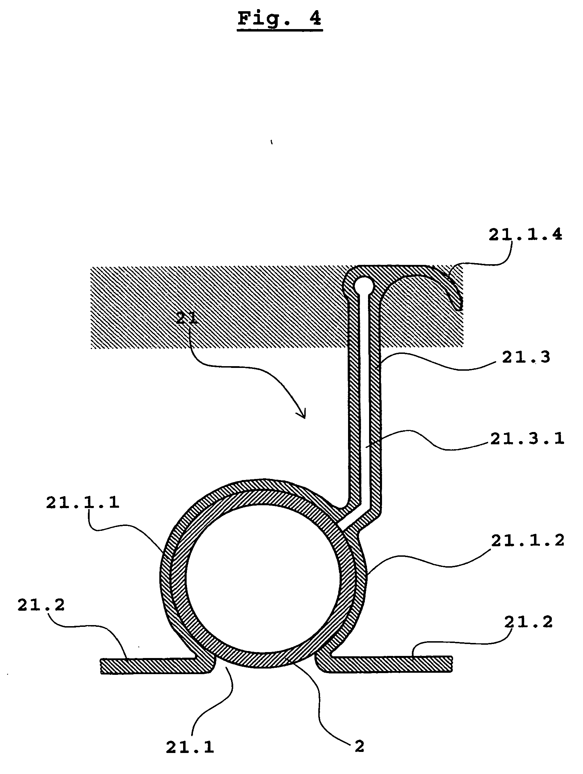

Fig. 4 zeigt einen Abschnitt eines erfindungsgemäßen, durch Strangpressen von Aluminium gefertigten Wärmeleitprofils 21, welches ähnliche Außenkontur wie das Wärmeleitprofil von Fig. 1 aufweisen kann. Die von der Rohraufnahmenut 21.1 wegführende Wand 21.3 weist zwei zueinander parallel verlaufende Schichten auf, zwischen denen sich ein schmaler Spalt 21.3.1 erstreckt, welcher in die Profilaufnahmenut 21.1 mündet und deren Begrenzungsfläche in zwei Teilflächenbereiche 21.1.1 und 21.1.2 teilt. Da lange, durchgehend schmale Spalte in Strangpressprofilen schwierig zu fertigen sein können, kann der Spalt 21.3.1 auch eine oder mehrere Verbreiterungen aufweisen. Zumindest am Übergangsbereich zur Nut 21.1 sollte er aber möglichst schmal sein um nicht unnötig Kontaktfläche zwischen Rohr 2 und Wärmeleitprofil 21 zu kosten.

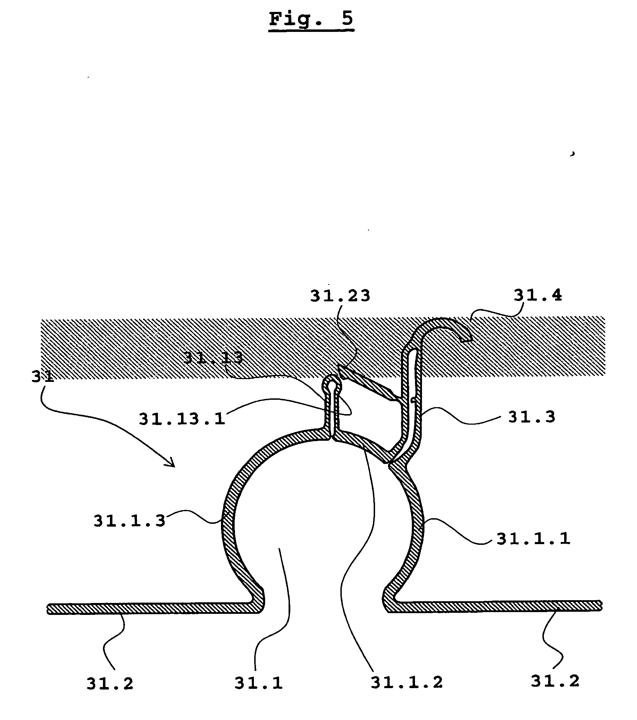

Fig. 5 zeigt einen Ausschnitt eines Wärmeleitprofils 31 welches gut durch Strangpressen von Aluminium herstellbar ist.
An Stelle von einer Rohraufnahmenut eines erfindungsgemäßen Wärmeleitprofils nur jeweils eine einzige, aus zwei Schichten aufgebaute Wand abstehen zu lassen, an welcher die Begrenzungsfläche der Rohraufnahmenut geteilt wird, können, wie in Fig. 5 dargestellt, auch mehrere derartige zweischichtige Wände von der Rohraufnahmenut abstehen. Vor allem als Strangpressprofil lässt sich das gut herstellen. Auch bei kleinen Außenabmessungen des Wärmeleitprofils lässt sich damit eine sehr gute elastische Weichheit der Rohraufnahmenut erreichen. Allerdings ist die damit einhergehende weitere Aufteilung der Wärmeübertragungsfläche zwischen Rohr und Wärmeleitprofil wegen der damit verbundenen Behinderung des Wärmeflusses tendenziell nachteilig.

Das Wärmeleitprofil 31 gemäß Fig. 5 weist zwei jeweils zweischichtige Wandbereiche 31.3, 31.13 auf, welche von der Nut 31.1 die für die Aufnahme eines Rohres bestimmt ist, abstehen, und die Begrenzung der Nut 31.1 in drei Teilflächenbereiche 31.1.1, 31.1.2, 31.1.3 aufteilen, indem der schmale Spalt zwischen den beiden Schichten eines Wandbereichs 31.3, 31.13 in die Nut 31.1 mündet. Gegenüber einer Aufteilung der Nutbegrenzung in nur zwei Teilflächenbereiche wird durch die Aufteilung der Nutbegrenzung in drei Teilflächenbereiche die Öffnung der Nut 31.1 weiter und weicher elastisch aufdehnbar.

Darüber hinaus weist das Wärmeleitprofil 31 eine Profilwand 31.23 auf, welche von dem Wandbereich 31.3 absteht und knapp über das freie Ende des Wandbereichs 31.13 ragt. Mit dem Wandbereich 31.3 ist die Profilwand 31.23 nur über einen sehr dünnen Steg verbunden, sodass die Profilwand 31.23 gegenüber dem Wandbereich 31.13 durch plastische Verformung des dünnen Steges ohne große Mühe schwenkbar ist.

Bestimmungsgemäß wird dann, wenn ein Rohr mit einer erfindungsgemäßen Vorrichtung in die Nut 31.1 eingebracht wurde, die Profilwand 31.23 um den schmalen Verbindungssteg zum Wandbereich 31.3 nach unten geschwenkt, sodass sie mit ihrem freien Ende auf das freie Ende des Wandbereichs 31.13 trifft, an diesem abgleitet, dabei den Wandbereich 31.13 etwas vom Wandbereich 31.3 weg biegt und schließlich an einem Winkelbereich 31.13.1 des Wandbereichs verrastet. Der Vorgang des Schwenkens der Profilwand 31.23 kann beispielsweise durch eine weitere Rolle der weiter oben besprochenen Vorrichtung 3 (gemäß Fig. 3) erreicht werden, welche hinter den Rollen, welche das Einlegen des Rohres bewirken angeordnet ist und von oberhalb auf die Profilwand 31.23 drückt. Indem durch die Profilwand 31.23 die beiden Wandbereiche 31.13, 31.3 etwas voneinander weggebogen werden, entsteht jeweils ein Drehmoment zwischen dem mittleren Teilflächenbereich 31.1.2 und den äußeren Teilflächenbereichen 31.1.1 bzw. 31.1.3 der Begrenzungsflächen der Nut 31.1, durch welchen die Nut 31.1 verengt wird. Bei in der Nut 31.1 befindlichem Rohr kommt es dadurch zu einem besseren Kontakt zwischen dem Rohr und den Begrenzungsflächen der Nut.

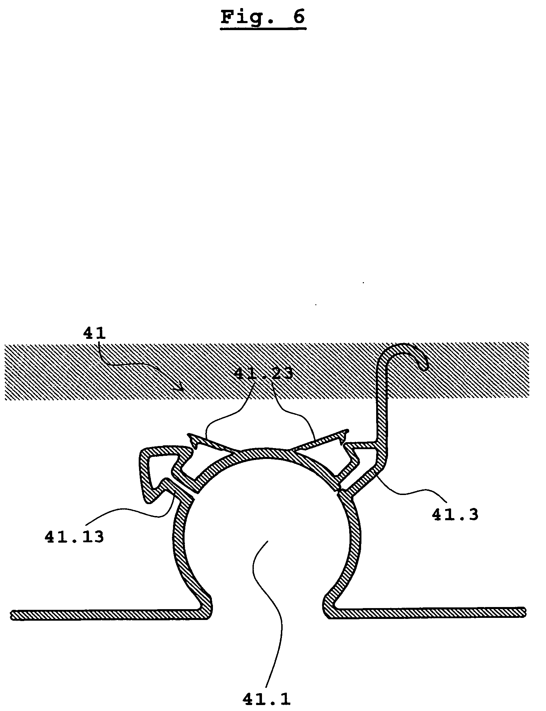

Fig. 6 zeigt einen Ausschnitt eines weiteren Wärmeleitprofils 41 welches auch gut durch Strangpressen von Aluminium herstellbar ist. Auch dieses Wärmeleitprofil weist zwei zweischichtige Wandbereiche 41.3, 41.13 durch welche die Begrenzungsfläche der Nut 41.1 in welche ein Rohr einzuklemmen ist in drei Teilflächen aufgeteilt wird. Das Wärmeleitprofil weist zwei Profilwände 41.23 aus, welche von der Außenseite der mittleren Begrenzungsfläche der Nut 41.1 in den Nahbereich von jeweils einem zweischichtigen Wandbereich 41.3, 41.13 ragen. Bestimmungsgemäß werden dann, wenn ein Rohr in die Nut 41.1 eingebracht wurde die beiden Wandbereiche 41.23 durch mechanische Einwirkung um ihre Verbindungsstelle mit der Begrenzungsfläche der Nut 41.1 so gebogen, dass sie mit ihrem freien Ende an den jeweiligen Wandbereich 41.3, 41.13 anstoßen, diesen etwas ausbiegen und dabei an dem Wandbereich 41.3 bzw. 41.13 einrasten. Bei in der Nut 41.1 befindlichem Rohr kommt es dadurch zu einem besseren Kontakt zwischen dem Rohr und den Begrenzungsflächen der Nut.
Das Biegen der Wandbereiche 41.23 kann beispielsweise durch eine weitere Rolle der weiter oben besprochenen Vorrichtung 3 (gemäß Fig. 3) erreicht werden, welche hinter den Rollen, welche das Einlegen des Rohres bewirken angeordnet ist und von oberhalb auf die beiden Profilwände 41.23 drückt. Vor dieser weiteren Rolle kann die Rolle 3.1 der Vorrichtung von Fig. 3 angeordnet sein.

Dabei ist die Rolle 3.1 so schmal zu bemessen, dass sie zwischen den Fußpunkten der Profilwände 41.23 an der Außenseite der Begrenzungsfläche der Nut 41.1 Platz findet.

## Patentansprüche

1. Wärmeleitprofil (1, 21, 31, 41), welches für die Wärmeübertragung an oder von einem Rohr (2), welches ein Wärmeträgermedium führen kann, dient, und eine Nut (1.1, 21.1, 31.1, 41.1, 41.1) mit unten liegender öffnungsfläche aufweist, in welche das Rohr (2) einklemmbar ist, wobei
jene Wand, welche als Begrenzung der Nut (1.1, 21.1, 31.1, 41.1) an dem einzuklemmenden Rohr (2) anliegt mindestens zwei Teilflächenbereiche (1.1.1, 1.1.2; 21.1.1, 21.1.2; 31.1.1, 31.1.2, 31.1.3) aufweist, wobei diese Teilflächenbereiche nicht unmittelbar miteinander verbunden sind, sondern durch mehrschichtig ausgeführte Profilwände (1.3, 1.4, 21.3, 31.3, 31.13, 41.3, 41.13) des Wärmeleitprofils (1, 21, 31, 41), welche von der bestimmungsgemäßen Berührungsfläche zum Rohr (2) abstehen, wobei zwei der Schichten dieser Profilwände nur an einem von der Nut entfernt liegendem Randbereich miteinander verbunden sind, wobei jeweils eine Schicht mit jeweils einem von den besagten Teilflächenbereiche direkt verbunden ist, und jeweils eine andere Schicht mit jeweils einem anderen von diesen Teilflächenbereichen,
**dadurch gekennzeichnet, dass**
für das Einbringen des Rohres in die Nut des Wärmeleitprofils nicht nur die Nutwände bzw. Teilflächenbereiche des Wärmeleitprofils sondern auch die Profilwände (1.3, 1.4, 21.3, 31.3, 31.13, 41.3, 41.13) elastisch verformt werden.

2. Wärmeleitprofil nach Anspruch 1, **dadurch gekennzeichnet, dass** in Querschnittsansicht der Abstand zwischen benachbarten Teilflächenbereichen (1.1.1, 1.1.2; 21.1.1, 21.1.2; 31.1.1, 31.1.2, 31.1.3) geringer ist als ein Fünftel der Länge der mehrschichtigen Profilwände (1.3, 1.4, 21.3, 31.3, 31.13, 41.3, 41.13).

3. Wärmeleitprofil (1) nach Anspruch 1 oder 2, **dadurch gekennzeichnet, dass** es zwei nach unten offene Nuten (1.1) aufweist, durch deren Öffnungsflächen eine Wärmeübertragungsfläche (1.2) in drei Abschnitte geteilt wird und dass von den Teilflächenbereichen (1.1.1, 1.1.2) der Begrenzung einer Nut (1.1) jeweils eine Schicht einer zweischichtigen Profilwand (1.3) emporragt, welche an ihrem von der Nut (1.1) abgewandten Endbereich zu einem Haken (1.4) gebogen ist.

4. Wärmeleitprofil (1) nach einem der Ansprüche 1 bis 3, **dadurch gekennzeichnet, dass** es ein durch Walzprofilieren umgeformtes Blechband umfasst.

5. Wärmeleitprofil (31, 41) nach einem der Ansprüche 1 bis 3, **dadurch gekennzeichnet, dass** von jener Nut (31.1, 41.1) aus, in welche ein Rohr (2) einzuklemmen ist, mehrere zweischichtige Wände (31.3, 31.13, 41.3, 41.13) abstehen und dadurch die Begrenzungsfläche der Nut (31.1, 41.1) in mehr als zwei nicht direkt miteinander verbundende Teilflächenbereiche (31.1.1, 31.1.2, 31.1.3) aufteilen.

6. Wärmeleitprofil (21) nach einem der Ansprüche 1, 2 oder 5, **dadurch gekennzeichnet, dass** es ein Strangpressprofil ist, dass zwischen zwei Schichten einer mehrschichtig ausgeführten Profilwand (21.3) ein Spalt (21.3.1) verläuft und dass die Breite dieses Spaltes an der Mündung zur Nut (21.1) geringer ist als an einem davon entfernt liegenden Bereich.

7. Wärmeleitprofil (31, 41) nach einem der Ansprüche 1, 2, 3, 5 oder 6, **dadurch gekennzeichnet, dass** es eine Profilwand (31.23, 41.23) aufweist, welche um eine zur Profilrichtung parallel liegende Achse gegenüber dem Rest der Profilfläche schwenkbar ist und dadurch mit mindestens einer der mehrschichtig ausgeführten Profilwände (31.3, 31.13, 41.3, 41.13) derart in Kontakt bringbar ist, dass diese ebenfalls um zur Profilrichtung parallel liegende Biegeachsen gegenüber ihrer sonstigen Lage ausgebogen wird.

## Claims

1. Heat-conducting profile (1, 21, 31, 41) which is used for the transfer of heat to or from a pipe (2) which can carry a heat transfer medium, and a groove (1.1, 21.1, 31.1, 41.1, 41.1) with a bottom opening area into which the pipe (2) can be clamped, wherein
the wall which abuts the clamped pipe (2) as a boundary of the groove (1.1, 21.1, 31.1, 41.1) displays at least two partial surface areas (1.1.1, 1.1.2, 21.1.1, 21.1.2, 31.1.1, 31.1.2, 31.1.3), wherein these partial surface areas are not directly connected to each other, but through multi-layered profile walls (1.3, 1.4, 21.3, 31.3, 31.13, 41.3, 41.13) of the heat-conducting profile (1, 21, 31, 41) which project from the intended contact surface to the pipe (2), wherein two of the layers of these profile walls are connected to each other only in a boundary area located at a distance from the groove, wherein one layer in each case is directly connected to one of the said partial surface areas and one other layer in each case to another of these partial surface areas, **characterised by** the fact that
for the insertion of the pipe in the groove of the heat transfer profile, not only the groove walls and partial surface areas of the heat transfer profile are elastically deformed, but also the profile walls (1.3, 1.4, 21.3, 31.3, 31.13, 41.3, 41.13).

2. Heat-conducting profile according to claim 1, **characterised in that**, in the cross-sectional view, the distance between adjacent partial surface areas (1.1.1, 1.1.2; 21.1.1, 21.1.2; 31.1.1, 31.1.2, 31.1.3) is less than a fifth of the length of the multi-layer profile walls (1.3, 1.4, 21.3, 31.3, 31.13, 41.3, 41.13).

3. Heat-conducting profile (1) according to claim 1 or 2, **characterised in that** it comprises two downwardly open grooves (1.1), through whose opening surfaces a heat transfer surface (1.2) is divided into three sections, and that from the partial surface areas (1.1.1, 1.1.2) of the boundary of one groove (1.1), one layer of a two-layer profile wall (1.3) protrudes in each case which is bent to form a hook (1.4) at its end section facing away from the groove (1.1).

4. Heat-conducting profile (1) according to one of claims 1 to 3, **characterised in that** it comprises a sheet metal strip reshaped by roll forming.

5. Heat-conducting profile (31, 41) according to one of claims 1 to 3, **characterised in that** from the groove (31.1, 41.1) into which a pipe (2) is to be clamped, a plurality of two-layer walls (31.3, 31.13, 41.3, 41.13) protrude and thus divide the boundary surface of the groove (31.1, 41.1) into more than two partial surface areas (31.1.1, 31.1.2, 31.1.3) which are not directly connected to each other.

6. Heat-conducting profile (21) according to any one of claims 1, 2 or 5, **characterised in that** it is an extruded profile, that a gap (21.3.1) runs between two layers of a multi-layered profile wall (21.3) and that the width of this gap at the opening to the groove (21.1) is smaller than at a region located further away from this.

7. Heat-conducting profile (31, 41) according to one of claims 1, 2, 3, 5 or 6, **characterised in that** it has a profile wall (31.23, 41.23) which is pivotable around an axis that is parallel to the direction of the profile with respect to the rest of the profile surface and can thus be brought into contact with at least one of the multi-layered profile walls (31.3, 31.13, 41.3, 41.13) in such a way that the latter is also bent compared to its normal position around bending axes which are parallel to the direction of the profile.

## Revendications

1. Profilé thermoconducteur (1, 21, 31, 41), lequel est utilisé pour le transfert de chaleur vers ou à partir d'un tube (2), lequel peut guider un fluide caloporteur, et présente une rainure (1.1, 21.1, 31.1, 41.1, 41.1) avec une zone d'ouverture placée en bas, dans laquelle le tube (2) peut être coincé,
ladite paroi, qui est adjacent au tube (2) à coincer, en tant que limitation de la rainure (1.1, 21.1, 31.1, 41.1), présentant au moins deux zones de surface partielle (1.1.1, 1.1.2 ; 21.1.1, 21.1.2 ; 31.1.1, 31.1.2, 31.1.3), lesdites zones de surface partielle n'étant pas directement reliées entre elles, mais par des parois de profilé de conception multicouches (1.3, 1.4, 21.3, 31.3, 31.13, 41.3, 41.13) du profilé thermoconducteur (1, 21, 31, 41), lesquelles sont éloignées de la surface de contact normale vers le tube (2), deux des couches de ces parois de profils étant seulement reliées entre elles à une zone de bordure se trouvant éloignée de la rainure, une couche étant directement reliée à chacune des zones de surfaces partielles en question, et une autre couche à chacune des autres de ces zones de surface partielle,
**caractérisée en ce que**
pour l'insertion du tube dans la rainure du profilé thermoconducteur, non seulement les parois de rainure ou les parois de zone partielle du profil thermoconducteur mais également les parois de profil (1.3, 1.4, 21.3, 31.3, 31.13, 41.3, 41.13) sont déformées élastiquement.

2. Profilé thermoconducteur selon la revendication 1, **caractérisé en ce qu'**en vue en coupe transversale, la distance entre les zones de surface partielle adjacentes (1.1.1, 1.1.2 ; 21.1.1, 21.1.2 ; 31.1.1, 31.1.2, 31.1.3) est inférieure à un cinquième de la longueur des parois de profilé multicouches (1.3, 1.4, 21.3, 31.3, 31.13, 41. 3, 41.13).

3. Profilé thermoconducteur (1) selon la revendication 1 ou 2, **caractérisé en ce qu'**il comprend deux rainures (1.1) ouvertes vers le bas, par l'intermédiaire desquelles des zones d'ouverture d'une surface de transfert de chaleur (1.2) est divisée en trois sections, et **en ce que** à chaque fois une couche d'une paroi de profil (1.3) à deux couches dépasse des zones de surface partielle (1.1.1, 1.1.2) de la limitation d'une rainure (1.1), laquelle est recourbée en un crochet (1.4) à sa zone d'extrémité opposée à la rainure (1.1).

4. Profilé thermoconducteur (1) selon l'une quelconque des revendications 1 à 3, **caractérisé en ce qu'**il comprend une bande de tôle façonnée par profilage.

5. Profilé thermoconducteur (31, 41) selon l'une quelconque des revendications 1 à 3, **caractérisé en ce que**, à partir de cette rainure (31.1, 41.1), dans laquelle un tube (2) doit être coincé, plusieurs parois à deux couches (31.3, 31.13, 41.3, 41.13) s'éloignent et ce faisant, les surfaces de délimitation de la rainure (31.1, 41.1) sont divisées en plus de deux zones de surface partielle (31.1.1, 31.1.2, 31.1.3) n'étant pas reliées directement entre elles.

6. Profilé thermoconducteur (21) selon l'une quelconque des revendications 1, 2 ou 5, **caractérisé en ce qu'**il est un profilé extrudé qu'une fente (21.3.1) parcourt entre deux couches d'une paroi de profilé (21.3) de conception multicouches, et **en ce que** la largeur de cette fente est plus petite à l'embouchure de la rainure (21.1) qu'au niveau d'une zone se trouvant à distance de celle-ci.

7. Profilé thermoccnducteur (31, 41) selon l'une quelconque des revendications 1, 2, 3, 5 ou 6, **caractérisé en ce qu'**il présente une paroi de profilé (31.23, 41.23) qui peut pivoter autour d'un axe parallèle à la direction du profilé par rapport au reste de la surface du profilé et ce faisant, peut être mis en contact avec au moins une des parois de profilé de conception multicouches (31.3, 31.13, 41.3, 41.13) de telle façon que celle-ci est également pliée autour des axes de flexion parallèles à la direction du profilé par rapport à leur autre emplacement.
